# EUROPEAN PATENT SPECIFICATION

(11) **EP 3 071 898 B1**
(45) Date of publication and mention of the grant of the patent: **05.02.2020**
(21) Application number: 14809509.4
(22) Date of filing: 07.11.2014
(51) Int. Cl.: F24H 8/00, F24H 9/00, F24H 9/02

(54) **COVER FOR CONDENSING BOILERS**
ABDECKUNG FÜR BRENNWERTKESSEL
COUVERCLE POUR CHAUDIERE A CONDENSATION

(30) Priority: 10.12.2013 IT AN20130237
(43) Date of publication of application: 28.09.2016
(73) Proprietor: Ariston Thermo S.p.A., 60044 Fabriano (Ancona) (IT)
(72) Inventor: ZAMPETTI, Alessandro, I-60020 Passatempo di Osimo (AN) (IT)
(74) Representative: Premru, Rok
(86) International application number: PCT/IB2014/002415
(87) International publication number: WO 2015/087119

(56) References cited:
- EP-A1- 0 052 055
- EP-A2- 0 016 700
- WO-A2-2011/057894
- FR-A1- 2 504 659
- US-A1- 2012 079 995

## Description

The object of the present invention in an innovative closing element (or "cover") of a sealed chamber of a condensing boiler, capable of performing a plurality of further functions.

More precisely, the present invention relates to a cover for the airtight sealing of a sealed chamber of a condensing boiler integrating at least coupling means for an exhaust system for combustion fumes generated in said boiler, and combustion air intake.

The invention therefore falls within the field of high performance heat generators (with yields, referred to the Inferior Calorific Power, in the range of 95-100%), in particular in that of condensing boilers for room heating and/or production of domestic hot water.

As is known, a condensing boiler comprises a box enclosure wherein is housed: at least a "combustion unit" comprising a combustion chamber, the relative gas burner and a primary heat exchanger in order to transfer heat from the combustion fumes to a heat transfer fluid; a fan for the circulation of fumes; a secondary heat exchanger for the production of domestic hot water.

The primary heat exchanger is of the "condensing" type, that is, comprising at least a "condensing" portion for the recovery of the fume condensing latent heat. At least the combustion unit is almost always enclosed in an airtight chamber (hereinafter "sealed chamber") usually coinciding or with the volume defined by the above-mentioned outer enclosure, or, alternatively, with that of a box body inside it, suitably designed and sized.

As is known, at least two conduits are connected to the sealed chamber, one for the combustion air intake and the other for fumes or combustion products exhaust.

Such conduits may be either coaxial (with the exhaust conduit inside the air inlet one) or separate (also called "split").

For example, according to a very common construction configuration, on the sealed chamber cover, which is generally a flat sheet of reduced thickness, there is provided a through hole whereat a "coaxial collar" capable of acting as a joint between it and the above-mentioned fume exhaust and combustion air intake coaxial conduit may be mounted.

It is equally known and frequent to provide on said sheet cover a pair of adjacent holes on each of which the respective fume expulsion or combustion air intake conduit is inserted through special collars, said solution, therefore lending to the use of "split systems".

As an alternative, "splitting kits" (which shall not be dealt at length, being them accessories well known to the man skilled in the art and available on the market in a great variety of designs), mountable on any coaxial collar, can convert a condensing boiler with fume exhaust and air inlet system of the "coaxial" type to a "split system" one, without the need of obtaining further holes on the cover of its sealed chamber.

Any extensions and/or adapters enable to satisfy any installation need and to overcome any issues arising from coupling the above-mentioned conduits to the boiler.

It is known that the fixing of collars (coaxial or not) to the boiler cover takes place through fixing screws and suitable gaskets ensuring the sealing of the underlying sealed chamber. This extends the mounting times. Moreover, despite the use of more suitable sealing members the adequate tightness of the sealed chamber is not always ensured, at least due to an imperfect tightening of the collar on the cover and/or to dimensional imperfections of the elements to be coupled.

On the other hand, the use of splitting kits increases the installation costs.

A known "coaxial system" for the discharge of combustion fumes produced in a boiler and for the intake of air required for the combustion is shown, e.g., in the document FR 2 504 659. More precisely, said "coaxial system" fits into the closing cover of an intermediate chamber of the boiler in communication with the conduit for the intake of combustion air.

Document WO 2011/057894 shows, instead, a coil-wound heat exchanger of a condensing boiler comprising "separate" couplings adapted to allow an insertion from the top of the exhaust conduit of combustion fumes and lateral of the feeding conduit of the air-gas mixture inside the burner.

The object of the present invention is thus to provide a simple and economical means for connecting the fume exhaust and combustion air intake conduits to the sealed chamber of a condensing boiler.

A further object of the present invention is to provide a means for connecting the fume exhaust and combustion air intake conduits to the sealed chamber of a condensing boiler which does not compromise the perfect sealing thereof.

A further object of the present invention is to provide a means for connecting the fume exhaust and combustion air intake conduits adapted to facilitate and speed up the assembly of one or more components of the condensing boiler.

These and other objects, which shall appear clearly hereinafter, are achieved with a cover for closing a sealed chamber of a condensing boiler according to claim 1. Other objects may also be achieved through the additional features of the dependent claims.

Further features of the present invention shall be better highlighted by the following description, in accordance with the patent claims and illustrated, by way of a non-limiting example, in the accompanying drawing tables, in which:
- Fig. 1 schematically shows an axonometric view of a wall-mounted condensing boiler according to the invention;
- Fig. 2 shows an axonometric view of a component, object of the invention, of the condensing boiler of Fig. 1;
- Fig. 3 shows a rear view of the component of Fig. 2;
- Fig. 4 shows a variant of the component of Fig. 2;
- Figs. 5a and 5b show two axonometric views of the condensing boiler of Fig. 1 with its outer casing fully assembled and not.

The features of the invention are now described using the references in the figures. It is noted that the above figures, although schematic, reproduce the components of the device in proportions between their spatial dimensions and orientations which are compatible with a possible embodiment which is among the preferred ones. It is also noted that any dimensional and spatial term (such as "lower", "upper", "inner", "outer", "front", "rear" and the like) refers to the position according to which the cover and the condensing boiler are shown in the annexed figures.

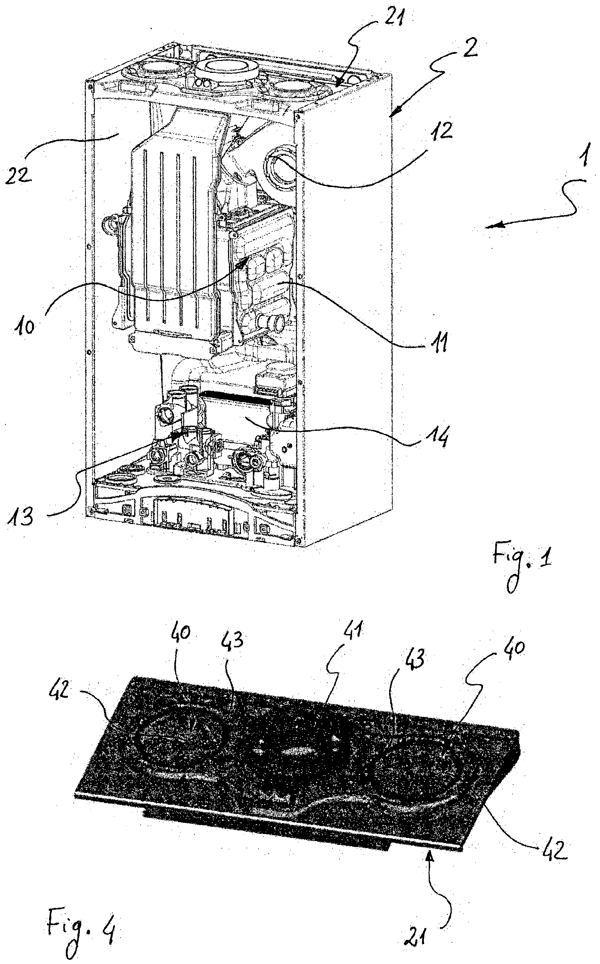

With reference to Fig. 1, reference numeral 1 indicates a condensing boiler of which, for the purposes of the invention, there are only shown: a combustion unit 10, comprising a gas burner, the relative combustion chamber (not shown) and the primary "condensing" heat exchanger 11; the relative ventilation unit 12; the hydraulic unit 13 of which substantially only the secondary heat exchanger 14 is shown for the production of domestic hot water.

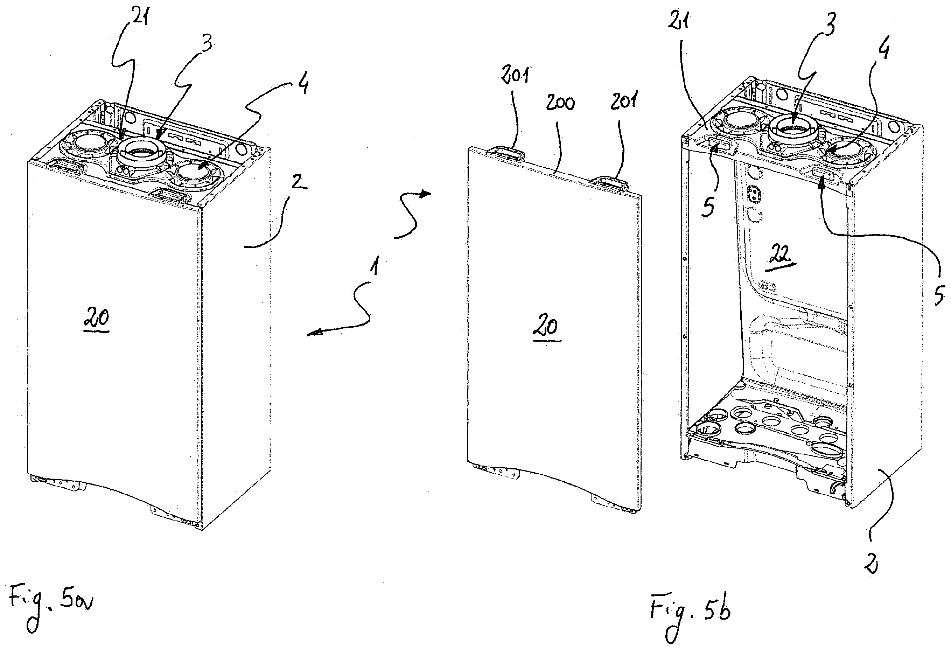

The above components are arranged within a box enclosure 2 (also called "chassis") closed frontally by a front panel 20 (see, for example, Fig. 5a), below from a bottom panel (not shown) and on top substantially by a wall 21 that for the purposes of the invention shall be called, hereinafter, "cover or top 21".

The outer enclosure 2 also acts as a sealed chamber 22 of the condensing boiler 1 through dedicated and known sealed members.

What said thus far does not substantially depart from the prior art.

However, according to the invention, said cover 21, instead of being a flat sheet comprising at least a hole for coupling the fume exhaust and/or combustion air intake system is a closing component 21 of plastic material implementing a plurality of functions.

More in particular, the cover 21 comprises first setting means 3 for the coupling of a known fume exhaust and combustion air intake conduit of the "coaxial" type (hereinafter, called "coaxial conduit", for simplicity of description) and second setting means 4 for the coupling of a "split" fume exhaust and air intake system (hereinafter called "split system").

Neither the coaxial conduits nor the split ones are shown in the figures annexed to the present description, being able to be similar to those of the prior art.

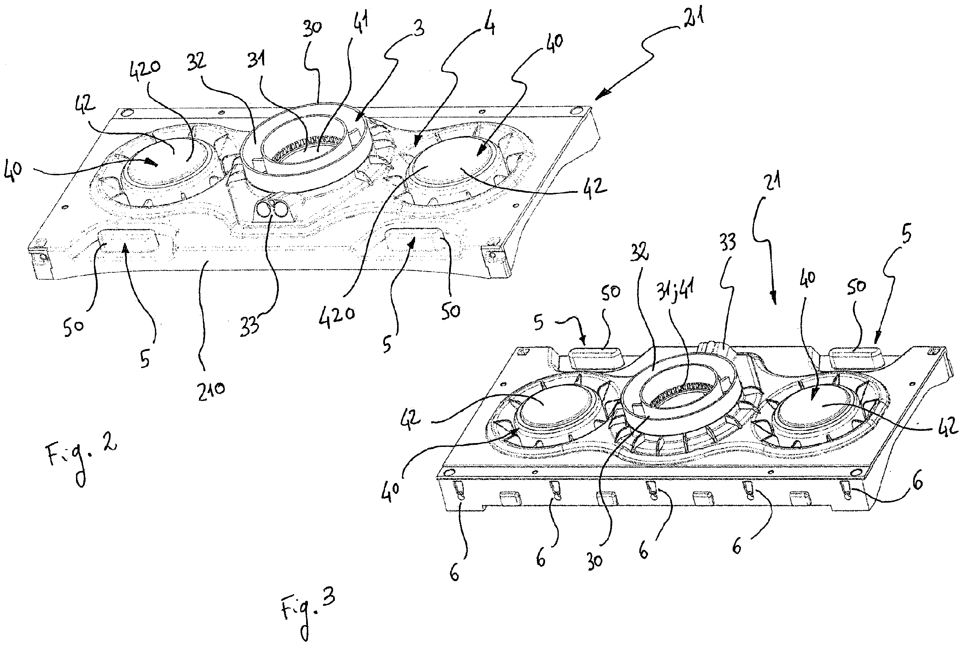

As is instead clearly shown in Fig. 2, said first setting means 3 for coupling an "coaxial conduit" consist of a connecting collar 30 totally similar to that of the prior art to be mounted (e.g., by screwing or welding), but integrally made with the cover 21 of the boiler 1.

Like the prior art solutions, therefore, also said collar 30, communicating with the interior of the sealed chamber 22 of the boiler 1, is provided with the fume exhaust outlet 31 inside the combustion air intake annular one 32 so as to receive and couple with the respective exhaust and intake sections of the coaxial conduit. The coaxial collar 30 may further comprise integrated known inlets 33 for the introduction of combustion fume analysis probes (not shown).

Sealing members between the collar 30 and the lower end of the coaxial conduit ensure the tightness of the sealed chamber 22 of the boiler 1 closed by said cover 21, as per the prior art.

On the other hand, the second setting means 4 for the coupling of a split exhaust system, also integrated to the cover 21 of the boiler 1, comprise a first coupling 41 for the fume exhaust conduit and at least a second coupling 40 for the combustion air intake conduit.

According to the invention, said first coupling 41 coincides with the fume exhaust 31 of the coaxial collar 30 described above (in such case the lower end of the fume exhaust conduit shall be, as per prior art, suitably shaped and designed to obstruct and seal the annular outlet 32 of the same collar 30, not used) while the second coupling 40 is a side opening suitable for receiving, as mentioned, the lower end of a combustion air intake conduit.

The opening 40 is normally closed by a cap 42, integrally made with the cover 21, when the condensing boiler 1 adopts a fume exhaust and air intake coaxial conduit; on the contrary, with "split systems" it must be removed in order to uncover the relative opening 40 for coupling the air conduit.

Preferably, said cap 42 consists of a shell 42 integrally moulded with the cover 21; the zone of the cover 21 at the circumferential outer edge of the cap 42 has a reduced thickness compared to the surrounding portions so as to facilitate the cutting (e.g. by a cutter) of said cap 42 and the total removal thereof.

By way of a non-limiting example, a thickness of about 0.5 mm is provided at the outer edge of said cap 42 against an average thickness of the remaining zones of the cover 21 of about 2 mm.

The removal of cap 42 may be eased by providing, in the proximity of its circumference, a co-moulded rubber cord 43 easily penetrable by a cutting tool and defining a guide for the cutting operation (see Fig. 4).

In order to satisfy any installation need, the cover 21 may be made with a third coupling 40 (and relative cap 42), totally similar to the second but obtained symmetrically to it relative to the minor axis of the cover 21.

According to where the combustion air inlet is located from the outside and the path that the relative conduit must follow in order to reach boiler 1, the installer may decide to open alternatively either one or the other coupling 40, according to a practice already used with the prior art systems and solutions.

According to another aspect of the invention, reference elements 5 for fixing the front panel 20 to the outer enclosure 2 of the boiler 1 may be also integrated on the cover 21.

As shown in Fig. 2, the reference elements 5 consist of a pair of opposed tangs 50, projecting from the laying plane of the cover 21 and located at its front face 210, whereon respective slots 201 of the upper edge 200 of the said front panel 20 (Fig. 5b) engage (e.g., by shape coupling or by interference).

A plurality of seats 6 for fixing (through screws or similar means) one or more components of the condensing boiler 1 to the cover 21 may be provided, for example, at the rear edge 211 thereof (see Fig. 3).

Finally, it should be noted that the cover 21 of the invention and the plurality of elements that it integrates, as already partly mentioned, is made by moulding of plastic material.

Therefore, it appears evident that with the cover 21 of the invention the intended objects are achieved, in particular the possibility of integrating in a single component, which acts as an upper wall of the sealed chamber 22 of a condensing boiler 1, a plurality of elements that makes it compatible, without structural complications or installation difficulties, both with fume exhaust and combustion air intake "coaxial" and "split" systems.

The integration in the cover of a coaxial collar and caps for "split systems" also eliminates the requested operation for the fixing thereof and the components normally used (for example, fixing screws and gaskets) making, as a consequence, the assembly of the boiler much simpler and quicker; this also reduces the risk of an imperfect tightness of the sealed chamber, at least resulting from errors and/or inaccuracies in the mounting thereof and/or for dimensional imperfections of the elements to be coupled.

Finally, the presence on the cover of reference elements for the fixing of the front panel facilitates and speeds up the composition of its outer enclosure.

## Claims

1. Cover (21) for closing a sealed chamber (2; 22) of a condensing boiler (1) on which at least one exhaust conduit of the combustion fumes produced in said condensing boiler (1) and at least one conduit for the entry of combustion air required for said combustion are intended to fit, said cover (21)
- acting as an upper wall of said sealed chamber (2; 22)
- comprising setting means (3; 4) for said coupling of:
- said at least one exhaust conduit of the combustion fumes, and
- said at least one conduit for the entry of combustion air said setting means (3; 4) being integrated and integrally made with said cover (21)
**characterised in that**
said setting means (3; 4) comprise:
- first setting means (3) for a fume exhaust and combustion air intake conduit of the "coaxial" type, said first setting means (3) comprising, in turn, a coaxial collar (30) integrally made with said cover (21) and comprising a fume exhaust outlet (31) within the annular air intake (32)
- second setting means (4) for a combustion fume exhaust and combustion air intake system of a "split system", said second setting means (4), integrated and integrally made with said cover (21) comprising:
- a first coupling (41) for a combustion fume exhaust conduit, said first coupling (41) comprising said fume exhaust outlet (31) of said coaxial collar (30),
- at least a second coupling (40) for a combustion air intake conduit, said second coupling (40) comprising an opening (40) adapted to accommodate the lower end of said combustion air intake conduit,
said cover (21) being suitable with both "coaxial system" and "split system" for the discharge of combustion fumes and for the intake of combustion air.

2. Cover (21) according to the previous claim,
**characterised in that**
said at least one second coupling (40) is closed by a cap (42), integrally made with said cover (21), said cap (42) being subject to:
- remain closed when said condensing boiler (1) adopts a fume exhaust and combustion air intake conduit of the "coaxial" type,
- be removed when said condensing boiler (1) adopts a fume exhaust and combustion air intake system of the "split" type.

3. Cover (21) according to the previous claim,
**characterised in that**
said cap (42) consists of a shell (42), integrally moulded with said cover (21), whose external circumferential edge has reduced thickness compared to the surrounding areas of said cover (21), said reduced thickness facilitating cutting and total removal operations of said cap (42) from said cover (21).

4. Cover (21) according to the previous claim,
**characterised in that**
in the proximity of the circumference of said cap (42), a co-moulded rubber cord (43) may be provided, said cord (43) being easily penetrable by a cutting tool and defining a guide for the cutting operation of said cap (42), whose total removal is simplified.

5. Cover (21) according to any previous claim
**characterised in that**
said at least one second coupling (40) for a combustion air intake conduit consists of a pair of couplings (40).

6. Cover (21) according to any previous claim
**characterised in that**
said coaxial collar (30) comprises integrated inlets (33) for the introduction of combustion fume analysis probes.

7. Cover (21) according to any previous claim
**characterised in that** it further comprises reference elements (5) for fixing a front panel (20) of the outer box enclosure (2) of said condensing boiler (1), said reference elements (5) being made at the front face (210) of said cover (21).

8. Cover (21) according to the previous claim,
**characterised in that**
said reference elements (5) comprise a pair of tangs (50), projecting from the laying plane of said cover (21), on said tangs (50) engaging respective slots (201) of the upper edge (200) of said front panel (20).

9. Cover (21) according to any previous claim
**characterised in that**
a plurality of seats (6) is provided on the rear edge (211) of said cover (21) for fixing one or more components of said condensing boiler (1).

10. Cover (21) according to any previous claim
**characterised in that** it is made by moulding of plastic material.

11. Condensing boiler (1) comprising the cover (21) according to one or more of claims 1 to 10.

## Patentansprüche

1. Abdeckung (21) zum Verschließen einer abgedichteten Kammer (2; 22) eines Brennwertkessels (1), an der mindestens eine Auslassleitung der Verbrennungsgase, die in dem Brennwertkessel (1) erzeugt werden, und mindestens eine Einlassleitung der Verbrennungsluft, die für die Verbrennung erforderlich ist, angebracht werden sollen, wobei die Abdeckung (21)
- als eine obere Wand der abgedichteten Kammer (2; 22) fungiert,
- Einstellmittel (3; 4) aufweist zum Verbinden von:
- der mindestens einen Auslassleitung der Verbrennungsgase und
- der mindestens einen Einlassleitung der Verbrennungsluft,
wobei die Einstellmittel (3; 4) in der Abdeckung (21) integriert und mit dieser einstückig ausgebildet sind,
**dadurch gekennzeichnet, dass**
die Mittel (3; 4) aufweisen:
- erste Einstellmittel (3) für eine Verbrennungsgasauslass- und Verbrennungslufteinlassleitung vom "koaxialen" Typ, wobei die Einstellmittel (3) ihrerseits einen koaxialen Kragen (30), der einstückig mit der Abdeckung (21) ausgebildet ist, aufweisen und einen Verbrennungsgasauslass (31) innerhalb des ringförmigen Lufteinlasses (32) aufweisen,
- zweite Einstellmittel (4) für ein Verbrennungsgasauslass- und Verbrennungslufteinlasssystem eines "Splitsystems", wobei die zweiten Einstellmittel (4), die in der Abdeckung (21) integriert und mit dieser einstückig ausgebildet sind, aufweisen:
- eine erste Verbindung (41) für eine Verbrennungsgasauslassleitung, wobei die erste Verbindung (41) den Verbrennungsgasauslass (31) des koaxialen Kragens (30) aufweist,
- mindestens eine zweite Verbindung (40) für eine Verbrennungslufteinlassleitung, wobei die zweite Verbindung (40) eine Öffnung (40) aufweist, die geeignet ist, das untere Ende der Verbrennungslufteinlassleitung aufzunehmen,
wobei die Abdeckung (21) sowohl mit dem "koaxialen System" als auch mit dem "Splitsystem" für das Ableiten der Verbrennungsgase und für das Einlassen der Verbrennungsluft geeignet ist.

2. Abdeckung (21) nach dem vorhergehenden Anspruch,
**dadurch gekennzeichnet, dass**
mindestens eine zweite Verbindung (40) durch eine Kappe (42) verschlossen ist, die einstückig mit der Abdeckung (21) ausgebildet ist, wobei die Kappe (42):
- geschlossen bleibt, wenn der Brennwertkessel (1) eine Verbrennungsgasauslass- und Verbrennungslufteinlassleitung vom "koaxialen" Typ annimmt,
- entfernt wird, wenn der Brennwertkessel (1) ein Verbrennungsgasauslass- und Verbrennungslufteinlasssystem des Typs des "Splitsystems" annimmt.

3. Abdeckung (21) nach dem vorhergehenden Anspruch,
**dadurch gekennzeichnet, dass**
die Kappe (42) aus einer Schale (42) besteht, die einstückig mit der Abdeckung (21) geformt ist, deren Außenumfangsrand im Vergleich zu den umgebenden Bereichen der Abdeckung (21) eine geringere Dicke aufweist, wobei die geringere Dicke die Vorgänge des Schneidens und des vollständigen Entfernens der Kappe (42) von der Abdeckung (21) erleichtert.

4. Abdeckung (21) nach dem vorhergehenden Anspruch,
**dadurch gekennzeichnet, dass**
in der Nähe des Umfangs der Kappe (42) eine zusammengeformte Gummischnur (43) vorgesehen sein kann, wobei die Schnur (43) leicht von einem Schneidwerkzeug durchdrungen werden kann und eine Führung für den Schneidvorgang der Kappe (42) definiert, deren vollständiges Entfernen vereinfacht wird.

5. Abdeckung (21) nach einem der vorhergehenden Ansprüche,
**dadurch gekennzeichnet, dass**
die mindestens eine zweite Verbindung (40) für eine Verbrennungslufteinlassleitung aus einem Paar Verbindungen (40) besteht.

6. Abdeckung (21) nach einem der vorhergehenden Ansprüche,
**dadurch gekennzeichnet, dass**
der koaxiale Kragen (30) integrierte Einlässe (33) für das Einführen von Analysesonden des Verbrennungsgases aufweist.

7. Abdeckung (21) nach einem der vorhergehenden Ansprüche,
**dadurch gekennzeichnet, dass** sie ferner Bezugselemente (5) für das Befestigen einer Frontplatte (20) des Außengehäuses (2) des Brennwertkessels (1) aufweist, wobei die Bezugselemente (5) an der Vorderseite (210) der Abdeckung (21) ausgebildet sind.

8. Abdeckung (21) nach dem vorhergehenden Anspruch,
**dadurch gekennzeichnet, dass**
die Bezugselemente (5) ein Paar Ansätze (50) aufweisen, die von der Ablagefläche der Abdeckung (21) vorstehen, wobei jeweilige Schlitze (201) des Oberrandes (200) der Frontplatte (20) in die Ansätze (50) eingreifen.

9. Abdeckung (21) nach einem der vorhergehenden Ansprüche,
**dadurch gekennzeichnet, dass**
mehrere Sitze (6) am hinteren Rand (211) der Abdeckung (21) zum Befestigen von einer oder mehreren Komponenten des Brennwertkessels (1) vorgesehen sind.

10. Abdeckung (21) nach einem der vorhergehenden Ansprüche,
**dadurch gekennzeichnet, dass** sie durch Formen von Kunststoff hergestellt ist.

11. Brennwertkessel (1), umfassend die Abdeckung (21) nach einem oder mehreren der Ansprüche 1 bis 10.

## Revendications

1. Couvercle (21) pour la fermeture d'une chambre étanche (2; 22) d'une chaudière à condensation (1) sur laquelle au moins un conduit d'échappement des fumées de combustion produites dans ladite chaudière à condensation (1) et au moins un conduit pour l'entrée d'air de combustion nécessaires à ladite combustion sont destinés à s'adapter, ledit couvercle (21)
- faisant office de paroi supérieure de ladite chambre étanche (2; 22)
- comprenant des moyens de réglage (3; 4) pour ledit couplage de :
- ledit au moins un conduit d'échappement des fumées de combustion, et
- ledit au moins un conduit pour l'entrée d'air de combustion
lesdits moyens de réglage (3; 4) étant intégrés et faisant corps avec ledit couvercle (21)
**caractérisé en ce que**
lesdits moyens de réglage (3; 4) comprennent :
- un premier moyen de réglage (3) pour un conduit d'admission d'air de combustion et d'air de combustion du type « coaxial », ledit premier moyen de réglage (3) comprenant à son tour un collier coaxial (30) réalisé d'une seule pièce avec ledit couvercle (21) et comportant une sortie d'échappement de fumée (31) dans l'entrée d'air annulaire (32)
- un deuxième moyen de réglage (4) pour un système d'évacuation des fumées de combustion et d'admission d'air de combustion d'un « système divisé », ledit second moyen de réglage (4), intégré et réalisé intégralement avec ledit couvercle (21), comprenant :
- un premier couplage (41) pour un conduit d'évacuation de fumée de combustion, ledit premier couplage (41) comprenant ladite sortie d'échappement de fumée (31) dudit collier coaxial (30),
- au moins un second couplage (40) pour un conduit d'admission d'air de combustion, ledit second couplage (40) comprenant une ouverture (40) adaptée pour recevoir l'extrémité inférieure dudit conduit d'admission d'air de combustion,
ledit couvercle (21) étant adapté à la fois au « système coaxial » et au « système divisé » pour l'évacuation des fumées de combustion et pour l'admission d'air de combustion.

2. Couvercle (21) selon la revendication précédente, **caractérisé en ce que**
ledit au moins un second couplage (40) est fermé par un capuchon (42), réalisé d'un seul tenant avec ledit couvercle (21), ledit capuchon (42) étant soumis à :
- rester fermé lorsque ladite chaudière à condensation (1) adopte un conduit d'admission d'air de combustion et de combustion du type « coaxial »,
- être retiré lorsque ladite chaudière à condensation (1) adopte un système d'admission d'air de combustion et d'évacuation des fumées du type « divisé ».

3. Couvercle (21) selon la revendication précédente, **caractérisé en ce que**
ledit capuchon (42) est constitué d'une coque (42), moulée de manière intégrée avec ledit couvercle (21), dont le bord circonférentiel externe a une épaisseur réduite par rapport aux zones environnantes dudit couvercle (21), ladite épaisseur réduite facilitant les opérations de coupe et de retrait total dudit capuchon (42) à partir dudit couvercle (21).

4. Couvercle (21) selon la revendication précédente, **caractérisé en ce que**
un cordon en caoutchouc co-moulé (43) peut être prévu à proximité de la circonférence dudit capuchon (42), ledit cordon (43) étant facilement pénétrable par un outil de coupe et définissant un guide pour l'opération de coupe dudit capuchon (42), dont la suppression totale est simplifiée.

5. Couvercle (21) selon une revendication précédente **caractérisé en ce que**
ledit au moins un deuxième couplage (40) pour un conduit d'admission d'air de combustion est constitué d'une paire d'accouplements (40).

6. Couvercle (21) selon une revendication précédente **caractérisé en ce que**
ledit collier coaxial (30) comprend des entrées intégrées (33) pour l'introduction de sondes d'analyse de fumée de combustion.

7. Couvercle (21) selon une revendication précédente **caractérisé en ce qu'**il comprend en outre des éléments de référence (5) pour fixer un panneau avant (20) de l'enceinte de boîtier externe (2) de ladite chaudière à condensation (1), lesdits éléments de référence (5) étant réalisés sur la face avant (210) dudit couvercle (21).

8. Couvercle (21) selon la revendication précédente, **caractérisé en ce que**
lesdits éléments de référence (5) comprennent une paire de languettes (50), faisant saillie du plan de pose dudit couvercle (21), sur lesdites languettes (50) s'engageant dans des fentes respectives (201) du bord supérieur (200) dudit panneau avant (20).

9. Couvercle (21) selon une revendication précédente **caractérisé en ce que**
une pluralité de sièges (6) est prévue sur le bord arrière (211) dudit couvercle (21) pour fixer un ou plusieurs composants de ladite chaudière à condensation (1).

10. Couvercle (21) selon une revendication précédente **caractérisé en ce qu'**il est fabriqué par moulage de matière plastique.

11. Chaudière à condensation (1) comprenant le couvercle (21) selon l'une ou plusieurs des revendications 1 à 10.
